# EUROPÄISCHE PATENTSCHRIFT

(11) **EP 0 539 359 B1**
(45) Veröffentlichungstag und Bekanntmachung des Hinweises auf die Patenterteilung: **20.04.1994**
(21) Anmeldenummer: 90910580.1
(22) Anmeldetag: 17.07.1990
(51) Int. Cl.: F23R 3/00, F23M 5/04, F02K 1/82

(54) **Rohrstück, insbesondere Flammrohr, mit gekühltem Stützrahmen für eine hitzefeste Auskleidung**
FLAME TUBE WITH A COOLED SUPPORTING FRAME FOR A HEAT-RESISTANT LINING
TUBE-FOYER A CHASSIS-SUPPORT REFROIDI POUR REVETEMENT REFRACTAIRE

(43) Veröffentlichungstag der Anmeldung: 05.05.1993
(73) Patentinhaber: SIEMENS AKTIENGESELLSCHAFT, 80333 München (DE)
(72) Erfinder: SCHETTER, Bernhard, W-4330 Mülheim-Ruhr (DE)
(86) Internationale Anmeldenummer: DE9000542
(87) Internationale Veröffentlichungsnummer: WO9201891

(56) Entgegenhaltungen:
- WO-A-91/2789
- DE-B- 1 021 647
- DE-C- 829 531
- FR-A- 2 552 860
- GB-A- 602 149
- US-A- 1 541 449
- US-A- 4 838 031
- PATENT ABSTRACTS OF JAPAN, vol. 8, no. 146(M-307)(1583) 07 July 1984
- PATENT ABSTRACTS OF JAPAN, vol.8, no. 104(M-296)(1541) 16 Mai 1984

## Beschreibung

Die Erfindung betrifft ein Rohrstück mit einem Innenbereich zur Führung eines heißen Gases in einer Strömungsrichtung und mit einem Hitzeschild aus einer Vielzahl nebeneinander angeordneter Steine, der dem Innenbereich zugewandt ist.

Derartige Rohrstücke finden vielfältige Verwendung als Flammrohre in Verbrennungsanlagen, insbesondere in Gasturbinenanlagen. In der DE-B-1 173 734 und der DE-C 25 23 449 sind solche Rohrstücke mit Hitzeschilden beschrieben, wobei ein Hitzeschild jeweils aus einer Vielzahl nebeneinander angeordneter Steine besteht und die Steine jeweils an zwei gegenüberliegenden Seiten mit Haltern verklammert werden. Befestigungen der Steine in der Richtung senkrecht zur Verklammerungsrichtung sind nicht explizit beschrieben. Für den Fall, daß das Rohrstück senkrecht oder zumindest schräg steht, ist eine Abstützung der Steine auf einem geeigneten Stützrahmen erforderlich. Für ein im wesentlichen waagerecht liegendes Rohrstück muß der Hitzeschild an jedem Ende mit einem geeigneten Rahmen abgeschlossen und gestützt werden. Ein entsprechender Stützrahmen wird in der Regel aus Metall gefertigt. Damit er den betrieblichen thermischen Beanspruchungen in demselben Maß wie der Hitzeschild standhalten kann, muß er ausreichend gekühlt werden.

Zur Kühlung eines Stützrahmens kann dieser mit Kanälen in Form von Bohrungen oder dergleichen versehen werden, durch die ein Kühlgas (das im Falle des Flammrohres in der Regel ein Teil der dem Flammrohr zugestellten Verbrennungsluft ist) strömen soll. Entsprechende Vorschläge sind z. B. der DE-C 25 23 449 entnehmbar. Problematisch ist hierbei vielfach die Tatsache, daß die Kühlluft in Form einzelner Strahlen in den Innenbereich des Rohrstücks einströmt. Dies hat zur Folge, daß in der Heißgasströmung Turbulenzen entstehen, wodurch heißes Gas auf die dem Innenbereich Zugewandte Oberfläche des Stützrahmens gewirbelt werden kann und diese beschädigt. Auch wird unter Umständen die heiße Strömung selbst durch querströmendes Kühlgas beeinträchtigt. Eine gewisse Abhilfe kann dadurch geschaffen werden, daß die Kanäle nicht senkrecht zur Oberfläche des Stützrahmens gerichtet werden, sondern in einem gewissen Winkel dazu. Diese Lösung ist allerdings nur sehr aufwendig zu fertigen und auch in ihrer Wirkung zumindest dann unbefriedigend, wenn Winkel gewählt werden, die noch mit vertretbarem Aufwand realisierbar sind.

In der JP-A-59-41716, vgl. Patent Abstracts of Japan, Band 8, Nr. 146 (M-307) (1583), ist ein Flammrohr mit einer Wand beschrieben, welche aus etwa konischen, unter Belassung von Schlitzen zur Durchleitung eines Kühlgases ineinander geschachtelten, keramischen Segmenten besteht.

Dementsprechend ist es ist die Aufgabe der Erfindung, ein hitzeschildbewehrtes Rohrstück mit mindestens einem Stützrahmen für den Hitzeschild zu schaffen, der effizient und möglichst sparsam gekühlt werden kann, wobei eine Beeinträchtigung der Heißgasströmung in dem Rohrstück und damit verbunden die Gefahr durch auf den Stützrahmen auftreffende Stromfäden heißen Gases vermieden wird.

Gemäß der Erfindung wird ein Rohrstück angegeben, das einen Innenbereich zur Führung eines heißen Gases in einer vertikalen Strömungsrichtung aufweist, bewehrt mit einem Hitzeschild aus einer Vielzahl nebeneinander angeordneter Steine, der dem Innenbereich zugewandt und mit mindestens einem Stützrahmen abgestützt ist, wobei der Stützrahmen aus einem Metall besteht, eine Vielzahl von Kanälen zur Zustellung eines Kühlgases sowie eine das Rohrstück unter Belassung eines Schlitzes umfangende Lippe aufweist, mit der die Kanäle zum Innenbereich hin im wesentlichen abgedeckt sind.

Erfindungsgemäß weist das Rohrstück einen Stützrahmen mit einem umfangenden Schlitz auf, in dem die durch die Kanäle strömenden Kühlgasmengen gesammelt werden, wobei eine gleichmäßige, langsame Strömung entsteht, die schließlich in den das heiße Gas führenden Innenbereich eintritt. Eine solche langsame Strömung vermag einen regelrechten Kühlgasfilm über dem Stützrahmen zu bilden, der den Stützrahmen sicher abschirmt, jedoch dabei die heiße Gasströmung nicht beeinträchtigt und keine Turbulenzen verursacht. Dadurch, daß die durch die Kanäle geführten Kühlfluidströme vor dem Eintritt in den Innenbereich auf die Lippe auftreffen, werden sie abgebremst und können unter Bildung eines gleichmäßigen Kühlfluidfilms zusammenfließen. Auch wird eine wirksame Prallkühlung der thermisch hoch belasteten Bereiche des Stützrahmens erzielt.

Um eine besonders gute Zusammenführung der den Kanälen entströmenden Kühlgasstrahlen zu erreichen, wird der Stützrahmen mit einer das Rohrstück umfangenden Sammelkammer oder Anordnung mehrerer Sammelkammern versehen, in die die Kanäle einmünden, und aus der das Kühlgas durch den Schlitz in den Innenbereich geleitet wird. In einer Sammelkammer können die Kühlgasströme abgebremst werden, so daß sich über den gesamten Umfang des Rohrstücks ein besonders gleichmäßiger Film bilden kann.

Unbeschadet anderweitiger Ausbildungen ist es besonders vorteilhaft, den Schlitz etwa parallel zur Strömungsrichtung auszurichten. So entsteht eine Kühlgasströmung, die weitgehend parallel oder antiparallel zur Strömungsrichtung liegt und möglichst wenig Geschwindigkeitskomponenten senkrecht zur Strömungsrichtung aufweist. Außerdem wird der thermisch am höchsten belastete Bereich des Stützrahmens, nämlich der dem Innenbereich unmittelbar zugewandte Bereich, effizient gekühlt. Durch die Ausbildung des thermisch am höchsten belasteten Bereiches als dünne Lippe erzielt man eine wirksame Prallkühlung durch die Kühlgasströme aus den Kanälen.

Neben möglichen anderweitigen Ausbildungen der Erfindung wird der Schlitz in dem Stützrahmen günstigerweise so gelegt, daß er in der Nähe des Anströmendes des Stützrahmens in den Innenbereich mündet. Auf diese Weise kann ein Kühlgasfilm erzielt werden, der im wesentlichen den gesamten Stützrahmen bedeckt und somit von dem heißen Gas abschirmt.

Im Rahmen einer besonders günstigen Realisierung der Erfindung ist das Rohrstück bezüglich einer zur Strömungsrichtung parallelen Achse etwa gerade. In Weiterbildung dessen ist das Rohrstück bezüglich der Achse axialsymmetrisch, insbesondere zylindrisch; so wird eine besonders einfach und kostengünstig herstellbare Ausführung der Erfindung erzielt.

Bevorzugte Anwendung findet ein erfindungsgemäßes Rohrstück als Flammrohr für eine Gasturbinenanlage. Das Rohrstück ist thermisch sehr hoch belastbar und erfordert zusätzlich eine nur geringe Kühlung, so daß zur Auslegung der Gasturbinenanlage eine große gestalterische Freiheit geboten wird.

Die weitere Erläuterung der Erfindung erfolgt anhand der in der Zeichnung dargestellten Ausführungsbeispiele.
Im einzelnen zeigen:
Fig. 1 ein Rohrstück mit Hitzeschild und Stützrahmen gemäß der Erfindung;
Fig. 2 und Fig. 3 eine Ausführungsform für den Stützrahmen gemäß der Erfindung;
Fig. 4 eine besonders günstige Ausgestaltung des erfindungsgemäßen Rohrstücks mit Hitzeschild und Stützrahmen.

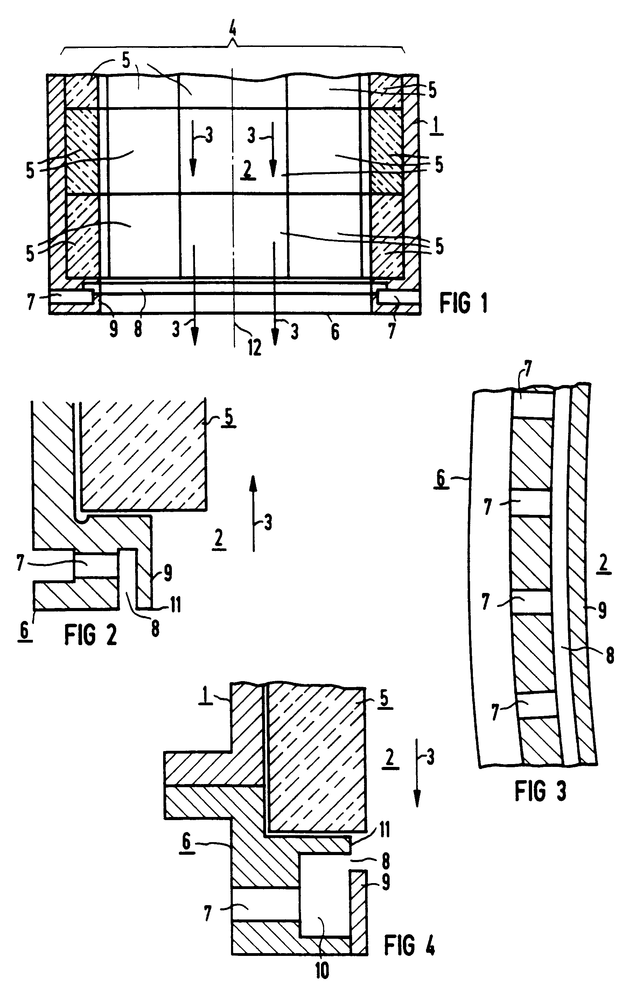

Fig. 1 zeigt ein gerades Rohrstück 1 mit einem im Bereich 2, durch den der durch Pfeile dargestellten Strömungsrichtung 3 ein Heißgas geführt werden soll. Das Rohrstück 1 ist ausgekleidet mit einem Hitzeschild 4, der aus neben- und übereinander angeordneten Steinen 5 besteht. Diese Steine sind mit entsprechenden Befestigungsmitteln in dem Rohrstück 1 befestigt. Auf die Darstellung der Befestigungsmittel, deren Art und Handhabung auch aus dem Stand der Technik hervorgeht, wurde der Übersicht halber verzichtet. An seinem unteren Ende weist das Rohrstück 1 einen Stützrahmen 6 auf, auf den die Steine 5 abgestützt sind. Dieser Stützrahmen 6 ist im vorliegenden Beispiel direkt an das Rohrstück 1 angeformt. Er kann natürlich auch, je nach Anforderung, gesondert hergestellt und später in geeignet erscheinender Weise mit dem übrigen Rohrstück 1 verbunden werden.

Der Stützrahmen 6 besteht aus Metall, wie das übrige Rohrstück, und ist daher thermisch weniger belastbar als der eigentliche Hitzeschild 4. Entsprechend erhält der Stützrahmen 6 eine besondere Kühlung. In den Außenumfang des Stützrahmens 6 sind Kanäle 7 eingebracht, durch die ein Kühlfluid, namentlich Kühlluft, in den Innenbereich 2 des Rohrstücks 1 geführt werden kann. Entsprechend der Erfindung münden die Kanäle 7 jedoch nicht unmittelbar in den Innenbereich 2, sondern sie münden im Inneren des Stützrahmens 6 in einen das Rohrstück 1 umfangenden Schlitz 8, der sich schließlich zum Innenbereich 2 des Rohrstücks 1 hin öffnet und von einer das Rohrstück 1 umfangenden Lippe 9 gebildet ist. In diesem Schlitz 8 können die aus den Kanälen 7 austretenden Kühlluftströme zusammenfließen zur Bildung eines langsamen und gleichmäßigen Kühlluftfilms, der sich, aus dem Schlitz 8 austretend, schützend über den Stützrahmen 6 legt und für eine zuverlässige thermische Abschirmung sorgt. Zum Innenbereich 2 des Rohrstücks 1 hin sind die Kanäle 7 im wesentlichen abgedeckt von einer Lippe 9 des Stützrahmens 6. Die durch die Kanäle 7 geführten Kühlluftströme treffen auf diese Lippe 9 auf und bewirken so eine zusätzliche Prallkühlung desjenigen Bereiches des Stützrahmens 6, der dem heißen Gas im Innenbereich 2 unmittelbar zugewandt ist.

Eine weitere Ausgestaltung des Stützrahmens 6 im Sinne der Erfindung ist in den Fig. 2 und 3 dargestellt. Der Einfachheit halber wird nunmehr auf beide Figuren gleichzeitig Bezug genommen. Wiederum ist zur Abstützung der Steine 5 ein Stützrahmen 6 vorgesehen, der kühlbar ist, indem Kühlluft durch Kanäle 7 in einen das Rohrstück 1 umfangenden Schlitz 8 und von dort in den Innenbereich 2 geführt wird. Um das Auftreten von Turbulenzen in der durch den Innenbereich 2 geführten heißen Gasströmung weitestgehend zu vermeiden, öffnet sich der Schlitz 8 nicht in einer Richtung senkrecht zu der Strömungsrichtung 3, sondern parallel dazu. Damit kann eine weitere Verlangsamung des Kühlluftfilms erzielt werden, und auch sein Anlegen an die zu kühlende Struktur, namentlich an die Lippe 9 wird begünstigt. Im Beispiel gemäß Fig. 2 würde die heiße Gasströmung zunächst an den Stützrahmen 6, und dann erst an den Steinen 5 entlang, geführt. Entsprechend öffnet sich der Schlitz 8 in den Innenbereich 2 in der Nähe des Anströmendes 11 des Stützrahmens 6, so daß sich der aus dem Schlitz 8 austretende Kühlluftfilm möglichst vollständig zwischen den Stützrahmen 6 und die heiße Gasströmung legen kann.

Eine weitere Ausgestaltung der Erfindung ist dargestellt in Fig. 4. Dort ist der Stützrahmen 6 als eigenes Bauteil dargestellt, das an die übrigen Teile des Rohrstücks 1 angeflanscht wird. Die Kühlung des Stützrahmens 6 erfolgt durch Kühlluft, die durch Kanäle 7 und einen Schlitz 8 in den Innenbereich 2 geführt wird; günstigerweise öffnet sich wiederum der Schlitz 8 in der Nähe des Anströmendes 11 des Stützrahmens 6 in den Innenbereich 2, so daß ein nach Möglichkeit den gesamten Stützrahmen 6 bedeckender, in Strömungsrichtung 3 fließender, Kühlluftfilm erzielt wird. Als Besonderheit weist der Stützrahmen 6 zwischen den Kanälen 7 und dem Schlitz 8 eine das Rohrstück 1 umfangende Sammelkammer 10 auf, in die die Kühlluft aus den Kanälen 7 einströmt, bevor sie durch den Schlitz 8 in den Innenbereich 2 entlassen wird. Die Sammelkammer 10 dient der weiteren Vergleichmäßigung der den Schlitz 8 verlassenden Kühlfluidströmung. Sie kann durchaus mehrteilig ausgebildet sein. Der Schlitz 8 ist gebildet zwischen dem Anströmende 11 und einer Lippe 9. Diese erhält eine wirksame Prallkühlung durch das Kühlfluid, das den Kanälen 7 entströmt. Die Lippe 9 kann im dargestellten Fall allerdings nicht einteilig mit dem Stützrahmen zusammen hergestellt werden, sondern muß als eigenes Bauteil mit dem Stützrahmen 6 verbunden werden. Dies stellt zwar fertigungstechnisch einen gewissen Nachteil dar, ermöglicht jedoch für den Stützrahmen 6 eine differenzierte Materialwahl. Der die Kanäle 7 enthaltende Teil des Stützrahmens 6 kann aus einem preiswerten und leicht bearbeitbaren Werkstoff, beispielsweise ferritischem Stahl, hergestellt werden, wohingegen für die Lippe 9 ein besonders hoch belastbarer Werkstoff, z. B. eine hochwarmfeste Nickellegierung, eingesetzt werden kann. Der zunächst zu befürchtende Kostennachteil kann auf diese Weise u. U. wieder aufgehoben werden.

Das erfindungsgemäße hitzeschildbewehrte Rohrstück ist thermisch besonders hoch belastbar und gestattet die weitgehend störungsfreie Führung einer Strömung heißen Gases. Es ist zum Einsatz in Verbrennungsanlagen, beispielsweise in Gasturbinen-Brennkammern, besonders geeignet.

## Patentansprüche

1. Rohrstück (1) mit einem Innenbereich (2) zur Führung eines heißen Gases in einer Strömungsrichtung (3), mit einem Hitzeschild (4) aus einer Vielzahl nebeneinander angeordneter Steine (5), welcher Hitzeschild (4) dem Innenbereich (2) zugewandt und mit mindestens einem Stützrahmen (6) abgestützt ist, der aus einem Metall besteht und eine Vielzahl von Kanälen (7) zur Zustellung eines Kühlgases aufweist, **dadurch gekennzeichnet,** daß der Stützrahmen (6) eine das Rohrstück (1) unter Belassung eines Schlitzes (8) umfangende Lippe (9) aufweist, mit der die Kanäle (7) zum Innenbereich (2) hin im wesentlichen abgedeckt sind.

2. Rohrstück (1) nach Anspruch 1, wobei der Schlitz (8) sich etwa parallel zur Strömungsrichtung (3) erstreckt.

3. Rohrstück (1) nach Anspruch 1 oder 2, wobei der Stützrahmen (6) eine das Rohrstück (1) umfangende Sammelkammer (10) aufweist, die die Kanäle (7) mit dem Schlitz (8) verbindet.

4. Rohrstück nach einem der vorhergehenden Ansprüche, wobei der Stützrahmen (6) ein Anströmende (11) aufweist, das von dem heißen Gas anströmbar ist und wobei der Schlitz (8) an dem Anströmende (11) in den Innenbereich (2) mündet.

5. Rohrstück nach einem der vorhergehenden Ansprüche, das bezüglich einer zur Strömungsrichtung (3) parallelen Achse (12) etwa gerade ist.

6. Rohrstück (1) nach Anspruch 5, das bezüglich der Achse (12) axialsymmetrisch, insbesondere zylindrisch, ist.

7. Flammrohr für eine Gasturbinenanlage, aufgebaut mit einem Rohrstück (1) nach einem der vorhergehenden Ansprüche.

## Claims

1. Pipe segment (1) having an inner region (2) for guiding a hot gas in a flow direction (3), a heat shield (4) comprising a plurality of adjacently disposed bricks (5), which heat shield (4) faces the inner region (2) and is supported by at least one support frame (6) which is made of metal and has a plurality of ducts (7) for supplying a cooling gas, characterised in that the support frame (6) has a lip (9) surrounding the pipe segment (1) leaving a slit (8), with which lip the ducts (7) are substantially covered towards the inner region (2).

2. Pipe segment (1) according to claim 1, wherein the slit (8) extends substantially parallel to the flow direction (3).

3. Pipe segment (1) according to claim 1 or 2, wherein the support frame (6) has a collecting chamber (10) surrounding the pipe segment (1), which joins the ducts (7) to the slit (8).

4. Pipe segment according to one of the preceding claims, wherein the support frame (6) has a leading end (11) against which the hot gas can flow, and wherein the slit (8) opens into the inner region (2) at the leading end (11).

5. Pipe segment according to one of the preceding claims, which is approximately straight with respect to an axis (12) parallel to the flow direction (3).

6. Pipe segment (1) according to claim 5, which is axially symmetrical, in particular cylindrical.

7. Flame pipe for a gas turbine installation, constructed with a pipe segment (1) according to one of the preceding claims.

## Revendications

1. Pièce tubulaire (1) comportant une zone intérieure destinée au passage d'un gaz chaud dans une direction d'écoulement (3), dotée d'un bouclier thermique (4) constitué d'une pluralité de briques (5) disposées les unes à côté des autres, ce bouclier thermique (4) étant tourné vers la zone intérieure (2) et étant supporté par au moins un châssis-support (6) qui est en un métal et qui comporte une pluralité de canaux (7) destinés à l'apport d'un gaz de refroidissement, caractérisé par le fait que le châssis-support (6) présente une lèvre (9) qui entoure la pièce tubulaire (1) en laissant subsister une fente (8), et par laquelle les canaux (7) sont sensiblement recouverts en direction de la zone intérieure (2).

2. Pièce tubulaire (1) selon la revendication 1, la fente (8) s'étendant à peu près parallèlement à la direction d'écoulement (3).

3. Pièce tubulaire (1) selon la revendication 1 ou 2, le châssis-support (6) comportant une chambre collectrice (10) qui entoure la pièce tubulaire (1) et qui met les canaux (7) en communication avec la fente (8).

4. Pièce tubulaire (1) selon l'une des revendications précédentes, le châssis-support (6) comportant une extrémité (11) d'arrivée de courant, dans laquelle peut passer un courant de gaz chaud, la fente (8) débouchant dans la zone intérieure à l'extrémité (11) d'arrivée de courant.

5. Pièce tubulaire (1) selon l'une des revendications précédentes, qui est approximativement droite par rapport à un axe (12) parallèle à la direction (3) d'écoulement.

6. Pièce tubulaire selon la revendication 5 qui est symétrique, en particulier cylindrique, par rapport à l'axe (12).

7. Tube-foyer pour installation de turbine à gaz, ayant une pièce tubulaire (1) selon l'une des revendications précédentes.
